# EUROPEAN PATENT APPLICATION

(11) **EP 1 063 603 A2**
(43) Date of publication of application: **27.12.2000**
(21) Application number: 00301795.1
(22) Date of filing: 06.03.2000
(51) Int. Cl.: G06F 17/60

(54) **Electronic forwarding system**

(30) Priority: 24.06.1999 JP 17766599
(71) Applicant: Hitachi, Ltd., Chiyoda-ku, Tokyo 101 (JP)
(72) Inventor: Miura, Junichi, c/o Hitachi Ltd., Intel. Prop. Grp, Chiyoda-ku, Tokyo 100-8220 (JP); Saito, Yukio, c/o Hitachi Ltd., Intel. Prop. Grp., Chiyoda-ku, Tokyo 100-8220 (JP); Koiso, Ryota, c/o Hitachi Ltd., Intel. Prop. Group, Chiyoda-ku, Tokyo 100-8220 (JP)
(74) Representative: Calderbank, Thomas Roger

(57) **Abstract**

A forwarding data receiving portion 16 which runs with an electronic forwarding server 10 in an electronic forwarding system 1 receives a forwarding request of forwarding data sent from a business system server 2, stores the received forwarding data in a forwarding data file 11 and also informs a forwarding data operations management portion 18 of the receiving conditions. The forwarding data operations management portion 18 registers the receiving conditions onto a forwarding management table 12 and displays it in an operations monitor terminal 20. According to the instruction from the operations monitor terminal 20, it sends a forwarding request of a forwarding matter to a forwarding data forwarding portion 17. The forwarding data forwarding portion 17 selects an electronic mail server 4 or an electronic mailing system 6 for every group of the forwarding data by referring to a destination management table 13 and a due form table 14 in order to forward data to each destination.

## Description

The present invention relates to a system in which data are forwarded by utilizing a computer, and in particular it relates to an electronic forwarding system in which a proper communication means is selected out of a plurality of communication means in order to forward the data to be forwarded to the destination, in response to the requests of a plurality of business systems.

For example, in a case where notices of demands for the payment of taxes, such as automobile taxes are issued or in a case where reminders for tax payment delay are delivered by a self-governing community to the residents, a relevant business system operating on the computer outputs in general the contents of notices in the form of slips such as postcards, and asks the post office to deliver them. With the increase in the number of the residents to be delivered, it takes a long time to output slips, and also it significantly increases the workload of workers who are concerned in the forwarding business, which remarkably increases the forwarding expenses. Similar problems have occurred in private corporations, for example, in a case where bills for users are output utilizing a computer to forward them by post.

As mentioned in the above, according to the prior art, there have been problems that a computer has to spend a long time to output slips to notify the exterior and the load of forwarding business and also the forwarding expenses become large. In a case, in particular, where a plurality of business systems in a governmental office, a municipal office or an enterprise issue such slips, the load for forwarding business of them and the expenses for forwarding them become very large.

An object of the invention is to avoid the output of paper slips and also to reduce the workload and the forwarding expenses accompanied by the forwarding business of paper by forwarding data electronically to the destinations.

According to the present invention, there is provided an electronic forwarding system comprising: a means for receiving a forwarding request of forwarding data, the forwarding request being issued by one of a plurality of business systems which output slips to be forwarded to an exterior, to store the received forwarding data in a storage unit; and a forwarding means for taking out each group of the forwarding data from the storage unit and selecting one of a plurality of communication means for each group of the forwarding data to forward the forwarding data through the selected communication means to each destination.

In the drawings:
Fig. 1 shows a block diagram of an electronic forwarding system shown in an embodiment according to the present invention;
Fig. 2 shows a block diagram showing instructions and data to be exchanged among respective constituent elements in the system shown in the embodiment;
Figs. 3(a) to 3(e) show diagrams showing the configuration of data in respective files;
Fig. 4 shows a flowchart of a receiving portion 16 for data to be forwarded shown in the embodiment; and
Fig. 5 shows a flowchart of a transmitting portion 17 for the data to be transmitted shown in the embodiment.

In the following, an embodiment according to the present invention will be explained with reference to drawings.

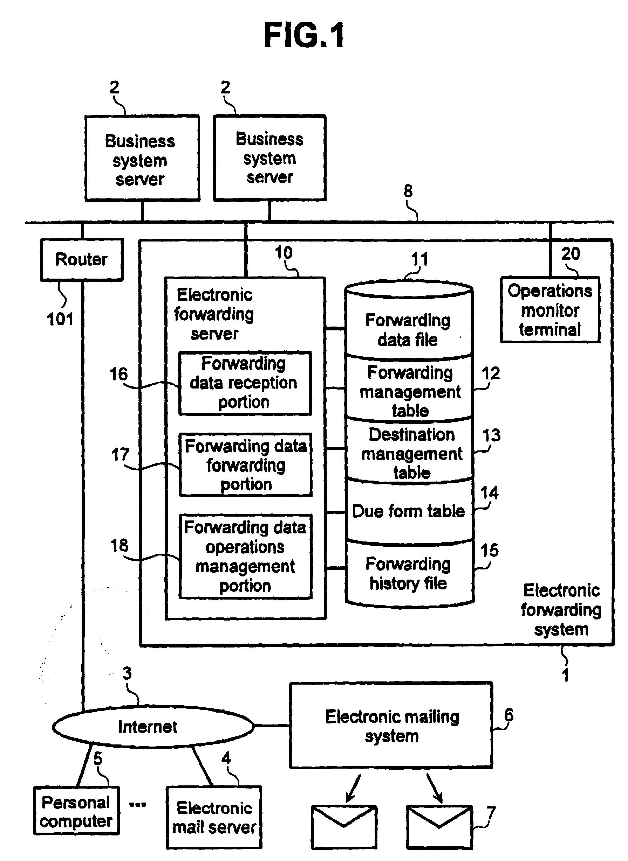

Fig. 1 shows a block diagram of an electronic forwarding system shown in the present embodiment. The system comprises a plurality of business system servers 2, an electronic forwarding system 1, the Internet 3, an electronic mailing system 6, an electronic mail server 4 to be connected to the electronic mailing system 6 and the Internet 3, and a personal computer 5. The business system servers 2 are connected to the electronic forwarding system 1 through a LAN 8. The LAN 8 is connected to the Internet 3 through a router. The electronic mailing system 6 is also connected to the Internet 3. The business system servers 2 are the originator of the request of a forwarding processing, and the servers 2 are computers on which are operated the business systems which output slips to be forwarded to the exterior.

The electronic forwarding system 1 comprises an electronic forwarding server 10, a forwarding data file 11, a forwarding management table 12, a destination management table 13, a due form table 14 and a forwarding history file 15 to be stored in the storage unit of the electronic forwarding server 10, and an operations monitor terminal 20. Programs for a forwarding data receiving portion 16, a forwarding data forwarding portion 17 and a forwarding data operations management portion 18 are stored in the memory of the electronic forwarding server 10 and is executed by the electronic forwarding server 10. The operations monitor terminal 20 is a computer such as a personal computer which is connected to the electronic forwarding server 10 through the LAN 8.

The electronic forwarding server 10 receives a forwarding request of data to be forwarded from the business system server 2 and accepts the respective forwarded data to keep them in files. The forwarding data are transmitted to the electronic mail server 4 through the Internet 3 by means of the electronic mail in accordance with the instruction of the operations monitor terminal 20 one by one, and the data are transmitted to personal computers 5 at respective destinations through the electronic mail server 4 or they are delivered to respective destinations as postal matters 7 through the electronic mailing system 6.

It is possible that at least the forwarding data receiving portion 16 and the forwarding data forwarding portion 17 are stored in a storage medium and the data are read in the memory of the electronic forwarding server 10 through a driving device connected to the electronic forwarding server 10, or the data are transferred to the electronic forwarding server 10 through a driving device connected to another computer, another computer, and a network and operated by the electronic forwarding server 10. Further, it is possible to store the program of the forwarding data operations management portion 18 in this storage medium.

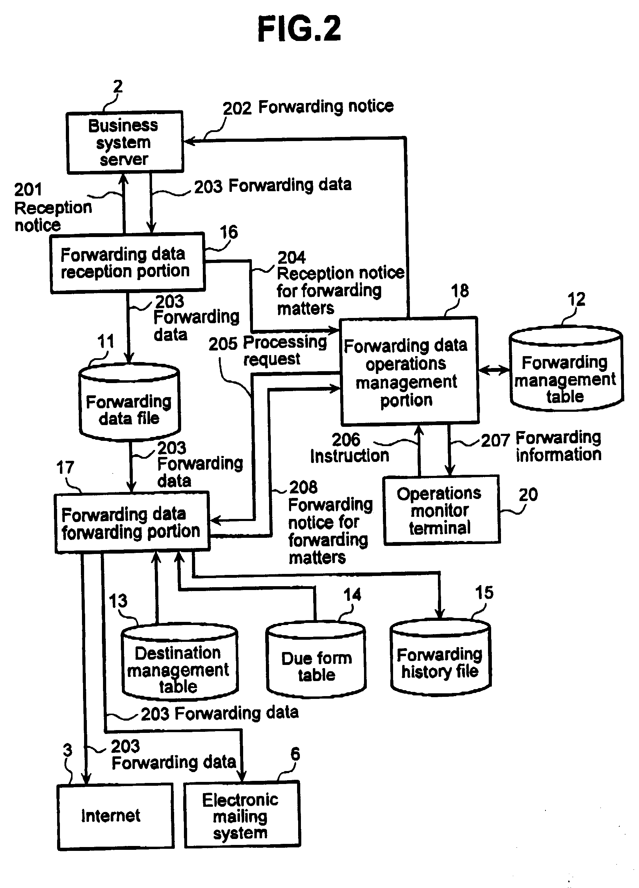

Fig. 2 shows a diagram showing instructions and data exchanged among respective constituent elements in the system. The forwarding data receiving portion 16, on receiving a forwarding request of a new forwarding matter from the business system server 2, answers a reception notice to the business system server 2, and stores the received forwarding data in the forwarding data file 11. Further the forwarding data receiving portion 16 notifies the forwarding data operations management portion 18 of the reception of the new forwarding matter. The forwarding data operations management portion 18 registers a record showing the conditions of the forwarding matter onto the forwarding management table 12. The forwarding data operations management portion 18 transmits the contents of the forwarding management table 12 to the operations monitor terminal 20 in accordance with the instruction of the operations monitor terminal 20. Further the forwarding data operations management portion 18 issues a forwarding processing request to the forwarding data forwarding portion 17 with respect to a forwarding matter which is instructed to forward by the operations monitor terminal 20. The forwarding data forwarding portion 17 reads out the forwarding data from the file in which the requested matter is stored, edits the forwarding data by referring to the destination management table 13 and the due form table 14, and transmits the forwarding data to the destination by a communication means utilizing electronic mail or electronic mailing system according to the destination section. The history of the forwarding data which have been normally forwarded are recorded in a forwarding history file 15. When the forwarding operation of a forwarding matter terminates, the forwarding data forwarding portion 17 informs the forwarding data operations management portion 18 of the termination of forwarding. The forwarding data operations management portion 18 transmits a forwarding notice to the relevant business system server 2 on receiving the notice.

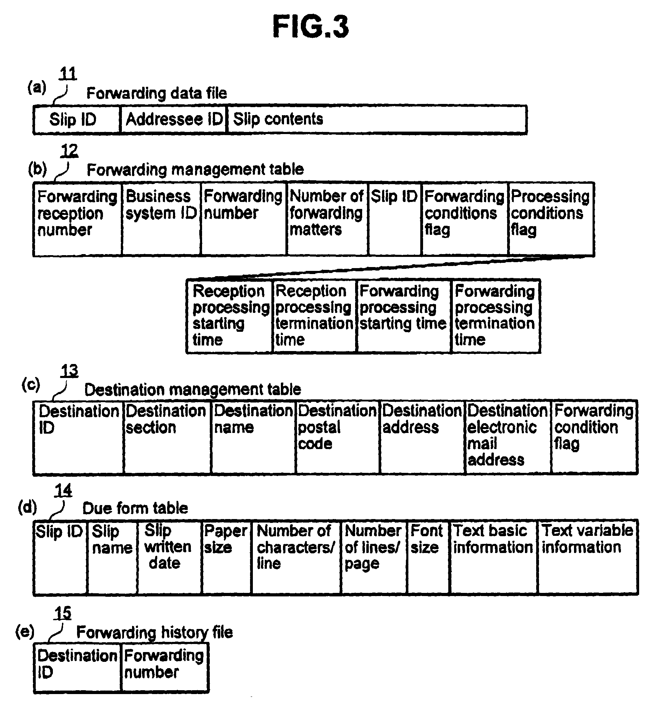

Figs. 3(a) to 3(e) show diagrams showing the data configuration of respective files to be used in the electronic forwarding system 1. The forwarding data file 11 is provided for each forwarding matter, and each forwarding data file is able to store a plurality of groups of forwarding data. Each group of forwarding data comprises a "slip ID", a "destination ID" and "slip contents" for a slip. The "slip ID" is an identifier showing the kind of a slip, the "destination ID" is an identifier for discriminating a destination. In general, the "slip IDs" of all the groups of forwarding data in a forwarding data file are identical.

Each record in the forwarding management table 12 is provided for each forwarding matter, and has the items as shown below; "forwarding reception number", "business system ID", "forwarding number", "number of forwarding matters", "slip ID", "forwarding condition flag, "processing condition flag", "reception processing starting time", "reception processing termination time", "forwarding processing starting time" and "forwarding processing termination time". The "forwarding reception number" shows the number given to each received forwarding matter, the "business system ID" shows an identifier of the business system server 2 originating a forwarding request, the "forwarding number" shows a number given when a forwarding matter is transferred to the step of a forwarding processing, the "number of forwarding matters" shows a number of matters which have been normally forwarded, the "slip ID" shows the ID of the above-mentioned slip. The "forwarding condition flag" shows a flag showing the status in the forwarding processing of the relevant reception matter, shown with the following expressions: "in reception", "received", "waiting for forwarding", " in forwarding" and "forwarded". The "processing condition flag" shows the flag showing conditions of a reception processing or a forwarding processing, and expressed with "in processing", "normal termination" or "abnormal termination". The "in processing" shows a state where a processing has been started but not terminated, the "normal termination" shows a state where a processing has been terminated normally and the "abnormal termination" shows a state where a processing is suspended by an abnormal situation. The "reception processing starting time" and the "reception processing terminating time" show starting/terminating time of the reception processing, and the "forwarding processing starting time" and the "forwarding processing terminating time" show the starting/terminating time of the forwarding processing.

Each destination record in the destination management table 13 has following items; "destination ID", "destination section", "destination name", "destination postal code", "destination address", "destination electronic mail address" and "forwarding condition flag". The "destination ID" shows the above-mentioned destination ID. The "destination section" shows a flag showing categories of a communication means to be utilized for the forwarding of forwarding data, that is, whether the communication means utilizes electronic mail or electronic mailing system. The "destination name", the "destination postal code" and the "destination address" are a destination address to be applied when the "destination section" shows electronic mailing system. The "destination electronic mail address" shows a destination address when the "destination section" shows electronic mail. It may have only one kind of destination address defined by the "destination section". In the case of the "forwarding condition flag", a flag is set for notifying "forwarded" or "forwarding abnormal" at the time of forwarding. The "forwarded" shows a state where data have forwarded normally, and the "forwarding abnormal" shows a state where forwarding is impossible due to indefiniteness of the destination, a trouble in the equipment to communicate with, etc. A telephone number for facsimile may be stored in the destination record in the destination management table 13.

Each due form record in the due form table 14 is provided for each kind of slips, and it has "slip ID", "slip name", and "slip written date" as basic information, "paper size", "number of characters/line", "number of lines/page", and "font sizes" as attributive information, and "text basic information", and "text variable information" as text information. The "slip ID" is the above-mentioned slip ID. The attributive information is the information for setting the due form of a slip, The "text basic information" stores the fixed information to be commonly added to a kind of slips. The "text variable information" stores variable information to be added according to conditions such as a difference in the "destination section".

Each record in the forwarding history file 15 stores the "destination ID" and the "forwarding number", and stores the destination ID and the forwarding number of the forwarded data which have been normally forwarded.

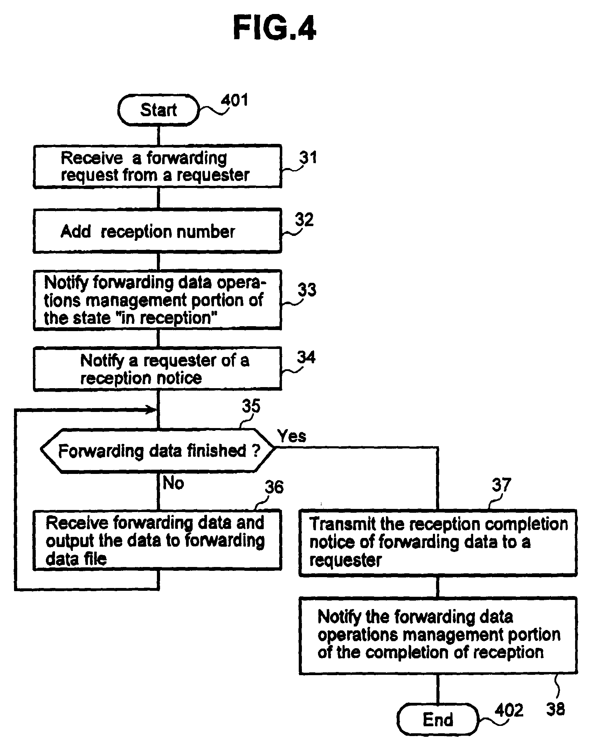

Fig. 4 shows a flowchart showing a processing flow in the forwarding data receiving portion 16. The forwarding data receiving portion 16, on receiving a forwarding request of a new forwarding matter accompanying the business system ID and the slip ID from one of the business system servers (step 31), adds the forwarding reception number thereto (step 32) and informs the forwarding data operations management portion 18 of the forwarding reception number and the business system ID and the slip ID of the requester (step 33). The forwarding data operations management portion 18 registers new records storing the "forwarding reception number", the "business system ID", the "slip ID", the "forwarding condition flag", the "processing condition flag", and the "reception processing starting time" in the forwarding management table 12. The "forwarding condition flag" shall be the flag of the "in reception". The "processing condition flag" shall be the flag of the "in processing". The forwarding data receiving portion 16 transmits the reception notice to the business system server 2 of the requester together with the forwarding reception number (step 34). A new file is created with a file name of a string of characters including the added forwarding reception number. When the reception of the forwarding data is not terminated (step 35, No), the forwarding data receiving portion 16 outputs the notice to the forwarding data file 11 which created the forwarding data received from the business system server 2 (step 36) and comes back to step 35. When the reception of the forwarding data is finished or it becomes impossible to continue the processing due to an abnormal situation (step 35, Yes), the forwarding data receiving portion 16 transmits a completion notice of the reception of the forwarding data to the business system server 2 of the requester (step 37) Next, the forwarding data receiving portion 16 notifies the forwarding data operations management portion 18 of the fact that the forwarding matter whose reception was completed has been received with its forwarding reception number, and also of the processing conditions thereof (step 38).

The forwarding data operations management portion 18 retrieves the forwarding management table 12 and updates the "forwarding condition flag" to a flag of "received", and updates the flag "processing condition flag" to "normal termination" or "abnormal termination" in the relevant record, and also stores the "receiving processing termination time". The "forwarding condition flag" of the forwarding matter whose "forwarding condition flag" is changed to "received" and the "processing condition flag" is changed to the "normal termination" will be updated to the "waiting for forwarding". The forwarding data operations management portion 18 answers the instruction from the operations monitor terminal 20 and displays the contents of the forwarding management table 12 on the display unit of the operations monitor terminal 20. When a forwarding matter in the state of "waiting for forwarding" is instructed from the operations monitor terminal 20, the forwarding data operations management portion 18 sends a forwarding request with the forwarding reception number to the forwarding data forwarding portion 17.

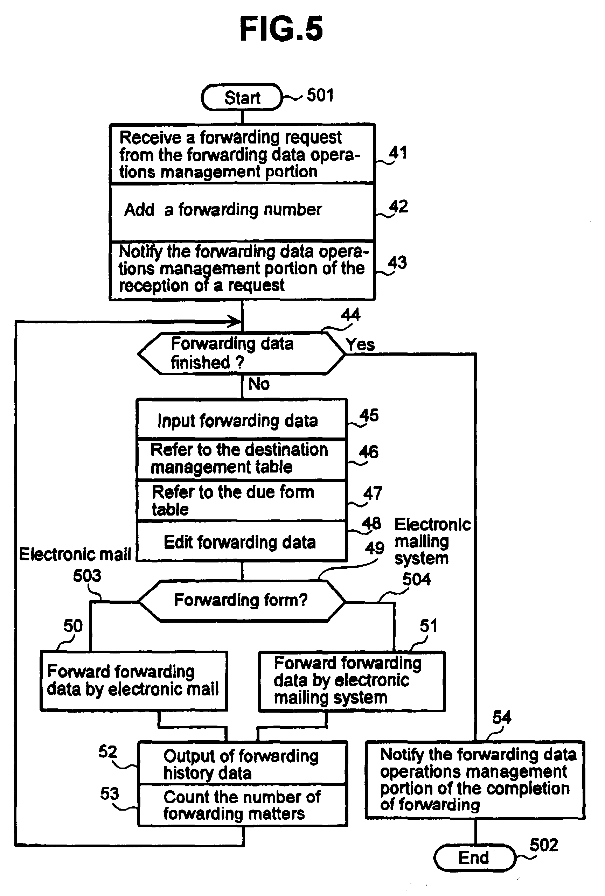

Fig. 5 shows a flowchart showing a processing flow in the forwarding data forwarding portion 17. The forwarding data forwarding portion 17 receives a forwarding request from the forwarding data operations management portion 18 (step 41), adds a forwarding number thereto (step 42), and notifies the forwarding data operations management portion 18 of the forwarding reception number and the added forwarding number (step 43). The forwarding data operations management portion 18 stores the "forwarding number" in the record of the notified forwarding matter by referring to the forwarding management table 12, and updates the "forwarding condition flag" to "in forwarding" and the "processing condition flag" to the "in processing", and stores the "forwarding processing starting time". Next, the forwarding data forwarding portion 17 finds the file name in the forwarding data file 11 with the use of the forwarding reception number of the forwarding matter whose forwarding request has been done and accesses to the relevant forwarding data file in the forwarding data file 11. When the forwarding of the forwarding data in the file is not finished yet (step 44, No), the forwarding data forwarding portion 17 inputs another matter of forwarding data (step 45). The forwarding data forwarding portion 17 finds the relevant destination record through the retrieval of the destination management table 13 with the use of the "destination ID" as a key (step 46). The forwarding data forwarding portion 17 retrieves the due form table 14 using the "slip ID" in the forwarding data as a key and obtains the relevant due form record (step 47). Next, based on the obtained due form record the forwarding data forwarding portion 17 edits the relevant forwarding data (step 48). At this time, the forwarding data forwarding portion 17 adds the "text basic information" in the due form record to the forwarding data according to the attributive information of the slip, and the forwarding data forwarding portion 17 selects the "text variable information" according to the "destination section", etc. to add it to the forwarding data. Further, the sign information of the forwarder is embedded in the forwarding data with electronic watermark technique.

Next, it is judged whether the "destination section" is electronic mail or electronic mailing system (step 49). When "destination section" shows electronic mail, the forwarding data are transmitted to the electronic mail server 4 according to the "destination electronic mail address" in the destination record through the Internet 3 (step 50). According to the case where the data have been normally forwarded or not, the flag of "forwarded" or the "forwarding abnormal" is stored in the "forwarding condition flag" in the destination record. When forwarding data are unable to be transmitted by electronic mail, in a case where the telephone number for facsimile is registered in the destination record, the data may be transmitted by facsimile. When the "destination section" shows electronic mailing system, the forwarding data are transmitted to the electronic mailing system 6 according to the "destination name", the "destination postal code" and the "destination address" (step 51). Similarly, according to the ease where the forwarding data have been forwarded normally or not, the flag "forwarded" or "forwarding abnormal" is stored in the "forwarding condition flag". The forwarding data classified to the "forwarding abnormal" may be moved to another file than the forwarding data file 11. In the case where the data have been normally forwarded, the forwarding data forwarding portion 17 outputS a record having the "destination ID" and the "forwarding number" in the forwarding history file 15 (step 52), and the forwarding data forwarding portion 17 counts the number of normally forwarded data (step 53), and the flow returns back to step 44. When the processing reaches the terminal end of the forwarding data file of the relevant forwarding matter or when the continuation of the processing is hindered by some abnormal situation (step 44, Yes), the forwarding data operations management portion 18 is informed of the forwarding reception number, the forwarding number, the number of forwarding matters and the processing conditions of the matters whose forwarding has been completed (step 54). The forwarding data operations management portion 18 retrieves the forwarding management table 12 and updates the "forwarding condition flag" of the relevant forwarding matters to "forwarded", updates the "processing condition flag" according to the processing conditions, and stores the "forwarding processing termination time".

The forwarding data operations management portion 18, when the forwarding matter is turned to "forwarded", notifies the relevant business system server 2 of the forwarding reception number, the forwarding number, the number of forwarding matters, and the results of processing (discrimination between normal termination and abnormal termination). The forwarding data operations management portion 18 retrieves the forwarding management table 12 in response to an inquiry from the business system server 2 and answers forwarding conditions. The forwarding data operations management portion 18 also accesses the destination management table 13, the due form table 14 and the forwarding history file 15 to obtain the information on the conditions of the "forwarding condition flag" of each destination record. The forwarding data operations management portion 18 also performs the maintenance of the destination management table 13 and the due form table 14.

In the above-mentioned embodiment it is assumed that the electronic forwarding system 1 is provided in the same governmental office, municipal office or enterprise and as a business server 2 is; however, even when the electronic forwarding system 1 constitutes an electronic forwarding center which performs the forwarding business independent of the business server 2, the present invention can be executed without any trouble. In this case, the electronic forwarding system 1 is connected to a business system server in another governmental office, municipal office or enterprise through a different LAN from LAN 8 and the Internet and it is able to perform a forwarding service for a governmental office, a municipal office or an enterprise in a form of outsourcing.

As mentioned in the above, according to the present invention, an electronic forwarding system performs concentrative editing for a plurality of business systems, selects a communication means to be utilized for each forwarding data and forwards data, so that a business system which is the source of the request of the forwarding data is made free from the editing processing and the output processing of slips, and it is made possible to reduce the workload and the forwarding expenses brought about with the paper forwarding business.

## Claims

1. An electronic forwarding system comprising:
a means for receiving a forwarding request of forwarding data, said forwarding request being issued by one of a plurality of business systems which output slips to be forwarded to an exterior, to store the received forwarding data in a storage unit; and
a forwarding means for taking out each group of the forwarding data from said storage unit and selecting one of a plurality of communication means for each group of the forwarding data to forward the forwarding data through the selected communication means to each destination.

2. An electronic forwarding system as claimed in claim 1, wherein a destination has different destination addresses according to said communication means, said forwarding data have an identifier of the destination, and said forwarding means selects a communication means which is associated with the identifier of said destination by referring to a table showing the correspondence between the identifier of the destination stored in said storage unit and said destination address.

3. An electronic forwarding system comprising:
a means for receiving a forwarding request of forwarding data, said forwarding request being issued by one of a plurality of business systems which output slips to be forwarded to an exterior, to store the received forwarding data in a storage unit;
a management means for monitoring a plurality of forwarding matters for receiving conditions and forwarding conditions and issuing a forwarding instruction of a forwarding matter to be forwarded; and
a forwarding means for taking out each group of the forwarding data from said storage unit on receiving the forwarding instruction and selecting one of a plurality of communication means for each group of the forwarding data to forward the forwarding data through the selected communication means to each destination.

4. A storage medium for storing a program which can be read by a computer, wherein said program has a first program means for receiving a forwarding request of forwarding data issued from an exterior to store the received forwarding data in a storage unit; and a second program means for taking out each group of the forwarding data from said storage unit and selecting one of a plurality of communication means for each group of the forwarding data to forward the forwarding data through the selected communication means to each destination.

5. A storage medium for storing a program which can be read by a computer, wherein said program has a first program means for receiving a forwarding request of forwarding data issued from an exterior to store the received forwarding data in a storage unit; a second program means for monitoring a plurality of forwarding matters for receiving conditions and forwarding conditions and issuing a forwarding instruction of a forwarding matter to be forwarded; and a third program means for taking out each group of the forwarding data from said storage unit on receiving the forwarding instruction and selecting one of a plurality of communication means for each group of the forwarding data to forward the forwarding data through the selected communication means to each destination.
